# EUROPEAN PATENT SPECIFICATION

(11) **EP 2 684 454 B1**
(45) Date of publication and mention of the grant of the patent: **30.08.2017**
(21) Application number: 12754790.9
(22) Date of filing: 01.03.2012
(51) Int. Cl.: A01N 25/00, A01N 43/653, A01P 3/00

(54) **MYCOTOXIN ACCUMULATION INHIBITION METHOD AND MYCOTOXIN ACCUMULATION INHIBITOR**
VERFAHREN ZUR HEMMUNG EINER MYKOTOXINANSAMMLUNG UND MYKOTOXINANSAMMLUNGS-HEMMER
PROCÉDÉ D'INHIBITION DE L'ACCUMULATION DE MYCOTOXINE ET INHIBITEUR DE L'ACCUMULATION DE MYCOTOXINE

(30) Priority: 09.03.2011 JP 2011051232
(43) Date of publication of application: 15.01.2014
(73) Proprietor: Kureha Corporation, Chuo-ku Tokyo 103-8552 (JP)
(72) Inventor: TATEISHI Hideaki, Tokyo 103-8552 (JP); NISHIUCHI Takumi, Kanazawa-shi Ishikawa 920-1164 (JP)
(74) Representative: BRP Renaud & Partner mbB Rechtsanwälte Patentanwälte Steuerberater
(86) International application number: PCT/JP2012/055225
(87) International publication number: WO 2012/121100

(56) References cited:
- EP-A1- 1 864 574
- EP-A1- 2 036 438
- WO-A1-2006/106742
- WO-A2-2009/068213
- JP-A- 2008 019 194
- JP-A- 2010 526 855
- JP-A- 2010 539 111
- Takashi Nakajima: "Fungicides Application against Fusarium Head Blight in Wheat and Barley for Ensuring Food Safety", Fungicides, 14 December 2010 (2010-12-14), pages 139-156, XP055133280, ISBN: 978-9-53-307266-1 Retrieved from the Internet: URL:http://cdn.intechopen.com/pdfs-wm/1238 5.pdf [retrieved on 2014-08-05]
- S. R. PIRGOZLIEV ET AL: "Effect of timing of fungicide application on the development of Fusarium head blight and the accumulation of deoxynivalenol (DON) in winter wheat grain", CEREAL RESEARCH COMMUNICATIONS, vol. 36, no. 2, 1 June 2008 (2008-06-01), pages 289-299, XP055133289, ISSN: 0133-3720, DOI: 10.1556/CRC.36.2008.2.9
- PAUL P A ET AL: "Efficacy of triazole-based fungicides for fusarium head blight and deoxynivalenol control in wheat: a multivariate meta-analysis", PHYTOPATHOLOGY, AMERICAN PHYTOPATHOLOGICAL SOCIETY, US, vol. 98, no. 9, 1 September 2008 (2008-09-01), pages 999-1011, XP002588882, ISSN: 0031-949X, DOI: 10.1094/PHYTO-98-9-0999

## Description

### Technical Field

The present invention relates to a method and a fungicide for inhibiting the accumulation of a mycotoxin in a grain of a cereal plant after cropping.

### Background Art

Fusarium head blight of a cereals such as wheat, barley, oats, rye, rice, corn and the like is a disease caused mainly by fungi included in the genus of Fusarium. The Fusarium head blight develops mainly in the spike of the plant, and causes a reduced yield of the crop and a deteriorated quality of the crop. The Fusarium head blight also causes an accumulation of a mycotoxin in the crop resulting from the production of the toxin by the pathogen (see Non-patent Document 1). The toxins produced by the pathogens of the Fusarium head blight include deoxynivalenol (DON) and nivalenol (NIV). Among these, a provisional standard value (1.1 ppm) of the concentration of DON in a crop is prescribed.

A chemical control of the Fusarium head blight by a fungicide application may allow DON or NIV to be detected at a high concentration in a grain after cropping even when the disease development was inhibited sufficiently. In addition, it was also reported that the concentration of DON in the grain is increased even during the storage stage after cropping.

Metconazole is one of triazole compounds having a potential of controlling activity on a disease in cereals, fruits, vegetables, lawn, rice and the like, and a fungicide whose active ingredient is metconazole has widely been used in controlling the Fusarium head blight in wheat families. The fungicide whose active ingredient is metconazole may for example be the pesticide registration No.22527 as a wettable powder and No.21925 as a dust formulation. These formulations should be applied no later than 14 days before cropping at a frequency of two times or less, and is usually applied only once in the flowering stage during which the highest controlling effect is obtained.
EP 1 864 574 A1 discloses a method for prominently inhibiting the production in funghi of mycotoxin, which has serious effects on health of humans and other animals, and provides a mycotoxin production inhibitor. Mycotoxin content such as deoxinivalenol (DON) in harvested crops can be reduced without a correlation with the control effects against funghi by spraying a fungicide containing a benzimidazole-type fungicidal compound such as thiophanate-methyl as an active ingredient onto food crops such as wheat, barley, and the like. Concomitant use of the ebnzimidazole-type fungicidal compound and a sterol biosynthesis inhibitor (SBI agent) such as tebuconazole can further enhance the effect.

T. Nakajima, "Fungicides Application against Fusarium Head Blight in Wheat and Barley for Ensuring Food Safety", Fingicides (Edited by Odile Carisse), December 2010, pages 139 - 156, examines mechanisms for chemically controlling Fusarium head blight (FHB) or mycotoxin contamination in barley and wheat.

S.R. Pirgozliev et al., "Effect of Timing of Fungicide Application on the Develeopment of Fusarium Head Blight on the Accumulation of Deoxynivalenol (DON) in Winter Wheat Grain", Cereal Research Communication 36 (2), 2008, pages 289 - 299, investigated the effect of of different timings of fungicide applications on Fusarium head blight severity and mycotoxin accumulation in wheat grain in two filed experiments. The fungicides Metconazole, tebuconazole, azoxystrobin and mixtures of metconazole + azoxystrobin as well as tebuconazole + azoxystrobin were applied either 5 days pre-, 2 day pre-, 2 days post- or 5 days post-inoculation of wheat ears with *Fusarium* ssp. and *Microdochium* ssp. at GS65. Fungicides applied 2 days pre- or 2 days post-inoculation were most effective at reducing Fusarium head blight severity and DON concentration in grain. Metconazole and tebuconazole applied alone within two days of inoculation were most consistent in their effects on *Tri5* DNA and DON in harvested grain.

P.A. Paul et al., "Efficacy of triazole-based fungicides for fusarium head blight and deoxynivalenol control in wheat: a multivariate meta-analysis", Phytopathology, American Phytopathological Society, Vol. 98, No. 9, 2008, pages 999 - 1011 describe the effects of propiconazole, prothioconazole, tebuconazole, metconazole, and prothioconazole + tebuconazole ( as a tank mix or a formulated premix) on the control of Fusarium head blight index (IND; field or plot-level disease severity) and deoxynivalenol (DON) in wheat. A multivariate random-effects meta-analytical model was fitted to the log-transformed treatment means from over 100 uniform fungicide studies across 11 years and 14 states, and the mean log ratio (relative to the untreated check or tebuconazole mean) was determined as the overall effect size for quantifying fungicide efficacy. Mean log ratios were then transformed to estimate mean percent reduction in IND and DON relative to the untreated check (percent control: C_{IND} and C_{DON}) and relative to tebuconazole. All fungicides lead to a significant reduction in IND and DON (P< 0.001), although there was substantial between-study variability. Prothioconazole + tebuconazole was the most effective fungicide for IND, with C_{IND} of 52 %, followed by Metconazole (50 %), prothioconazole (48 %), tebuconazole (40 %), and propiconazole (32 %). For DON, metconazole was the most effective treatment with a C_{DON} of 45 %; prothioconazole + tebuconazole and prothioconazole showed similar efficacy, with C_{DON} values of 42 and 43 %, respectively; tebuconazole and propiconazole were the least effective, with C_{DON} values of 23 and 12 %, respectively. All fungicides, with the exception of propiconazole, were significantly more effective than tebuconazole for control of both IND and DON (P < 0.001). Relative to tebuconazoleprothioconazole, Metconazole, and tebuconazole + prothioconazole reduced disease index a further to 14 to 20 % and DON a further to 25 to 29 %. In general, fungicide efficacy was significantly higher for spring wheat than for soft winter wheat studies; depending the fungicide, the difference in precent control between spring and soft wither wheat was 5 to 20 % for C_{IND} and 7 to 16 % for C_{DON}. Based on the mean log ratios and between-study variances, the probability that IND or DON in a treated plot from a randomly selected study was lower than that in the check by a fixed margin, which confirmed the superior efficacy of prothioconazole, Metconazole, and tebuconazole + prothioconazole for Fusarium head blight disease and toxin control.
From EP 2036 438 A1, methods are known for the protection of harvested fruit or vegetables against decay caused by certain storage diseases or disoredes expressed in storage conditions. Furthermore, EP 2 036 438 A1 describes the application of certain fungicidal active compounds to protect harvested fruit or vegetables against phytopathogenic fungi.

### Citation List

### Non-patent Document 1

[Non-patent Document 1] "Levels and pattern of contamination with trichothecenes in cereal grains and their risk assessment." Mycotoxins, Vol.53 (2), 2003

### Summary of Invention

### Technical Problem

As described above, the conventional chemical control of the Fusarium head blight may pose a difficulty in accomplishing a sufficient inhibition of the accumulation of the mycotoxin in a grain after cropping, although it can prevent the onset of the disease. Thus, the conventional fungicide has an insufficient or no ability of inhibiting the toxin production, although it has a sufficient biocidal effect on the pathogen.

Accordingly, an object of the present invention is mainly to provide a fungicide enabling an effective inhibition of mycotoxin accumulation in a crop and a mycotoxin accumulation preventing method using the fungicide.

### Solution to Problem

To solve the problems described above, we evaluated the toxin production inhibiting effects of various fungicides on the pathogens. As a result, we discovered that metconazole has an inhibitory activity on the toxin production by a pathogen and that the accumulation of the toxin in a grain after cropping can be inhibited even when metconazole is applied after the flowering stage during which the application is conducted usually, and finally established a practically employable mycotoxin accumulation preventing method using metconazole. More specifically, the present invention provides a method for inhibiting the accumulation of mycotoxin produced by a pathogen in a grain after cropping according to claim 1, and use of a fungicide comprising metconazole as an active ingredient according to claim 6.

Thus, the present invention provides a mycotoxin accumulation inhibition method for inhibiting the accumulation of the mycotoxin in a grain after cropping comprising (i) treating the cereal plant after the flowering stage, which is the day when the spike of the grain having at least one flowering spikelet occupies 40-50% of the entire spikes, with a fungicide containing metconazole as an active ingredient, wherein the concentration of metconazole in the fungicide is 1/20 to 1/5 of the concentration employed for control of said pathogen. The time of the aforementioned first fungicide treatment step may be a stage from the beginning of the yellowing stage of the aforementioned cereal plant through the end of the browning stage or a time after cropping. It may also be both a stage from the beginning of the yellowing stage of the aforementioned cereal plant through the end of the browning stage and a time after cropping.

Such a treatment of a cereal plant after the flowering stage with a fungicide containing metconazole as an active ingredient serves to exhibit an efficient inhibitory activity on the accumulation of a mycotoxin produced by a microorganism in the cereal plant.

The mycotoxin accumulation inhibition method according to the invention may comprise a second fungicide treatment step for treating the cereal plant with the fungicide during the flowering stage thereof. By conducting the fungicide treatment also during the flowering stage, the disease can be controlled as required while ensuring a further effective inhibition of the accumulation of the toxin in a grain after cropping.

In the mycotoxin accumulation inhibition method according to the invention, when the fungicide treatment is conducted for the purpose of controlling a disease in the second fungicide treatment step, the concentration of metconazole in the fungicide used in the first fungicide treatment step may be lower than the concentration of metconazole in the fungicide used in the second fungicide treatment step. In such a way, the accumulation of the toxin in the grain after cropping can sufficiently be inhibited while preventing an excessive retention of the fungicide in the grain.

### Advantageous Effects of Invention

As discussed above, the mycotoxin accumulation inhibition method according to the invention comprises a step for treating a cereal plant after the flowering stage with a fungicide containing metconazole as an active ingredient, wherein the concentration of metconazole in the fungicide is 1/20 to 1/5 of the concentration employed for control of said pathogen. Metconazole can inhibit the accumulation of a mycotoxin in a cereal plant by inhibiting the production of the toxin by the microorganism. Thus, by treating the cereal plant after the flowering stage with metconazole, an inhibitory activity on the accumulation, in the cereal crop, of the toxin produced by the pathogen remaining after the time suitable for the application of a fungicide for controlling the disease can be exhibited.

### Brief Description of Drawings

Figure 1 is a figure-substituting graph indicating the results of the toxin production inhibition test using metconazole (Test Example 1).
Figure 2 is a figure-substituting graph indicating the results of the toxin accumulation inhibition test in a grain using metconazole for pre-cropping treatment (Test Example 2).

### Description of Embodiments

Prior to discussing the mycotoxin accumulation inhibitor and the mycotoxin accumulation inhibition method according to the invention, the definitions of the terms employed in the specification and the claims are described below.

The "cereal plant" generally means a gramineous plant whose seed is edible. Such a cereal plant at least includes wheat, barley, rye, oat, wild oat, tear grass, rice, corn, millet, foxtail millet, barnyard grass and the like.

The "mycotoxin" includes deoxynivalenol (DON) and nivalenol (NIV) produced by the pathogens of the Fusarium head blight, as well as T2 toxin, zearalenone and fumonisin.

The "flowering stage" is the day when the spike having at least one flowering spikelet occupies 40 to 50% of the entire spikes. The "yellowing stage" is a stage when the stems and the leaves become yellowish tan to tan color, and the spike is readily broken and the kernel water content becomes about 20 to 30%. The "browning stage" is a stage when the plant body is in a withering state and the spike tends to be broken and the kernel water content becomes about 20% or less.

The growth stages of the cereal plant including the "flowering stage" and the "yellowing stage", "browning stage" are described typically in the case of wheat as an example. The growth stages of the wheat during a stage from the spike emergence through cropping can be divided sequentially into "heading stage", "full heading stage", "flowering stage", "milking stage", "turning color stage", "yellowing stage" and "browning stage". The growth stages of other cereal plants can be divided similarly.

The "heading stage" is the day when the tip of the spike including no awn has emerged from 40 to 50% of the all leaf sheathes, and the "full heading stage" is the day when the heading is observed in 80 to 90% of the all leaf sheathes. Usually, the plant is cropped 40 to 50 days after the heading stage.

The "flowering stage" is the day when the spike having at least one flowering spikelet occupies 40 to 50% of the entire spikes, and the fungicide treatment for the purpose of disease control is conducted generally during the flowering stage or after the flowering stage.

The "milking stage" is a stage during which the lower leaves are withering and the upper leaves are still green, and the spike is yellowish green, and the kernel water content is about 40% or more, and the "turning color stage" is a stage during which one to 2 upper leaves are still green, and the spike is yellow, and the kernel water content is about 20 to 40%.

The "yellowing stage" is a stage during which the stems and the leaves are withering and the spikes loose the green color, and the kernel water content is about 20 to 30%, which corresponds to the time immediately before cropping through the time suitable for cropping. The cropping is conducted usually at the later stage of the browning stage, and the day about 14 days immediately before cropping and later corresponds to the beginning of the browning stage.

The "browning stage" is a stage during which the plant body is in a withering state and the spike is readily broken and the kernel water content becomes about 20% or less, with a hardness allowing no nail mark to remain.

The terms "first" and "second" as used in the "first fungicide treatment step" and the "second fungicide treatment step" are used only for distinguish the both fungicide treatment steps literally. The terms "first" and "second" do not mean the temporal sequence (order) of the both steps. Moreover, each of those terms does not mean the number of the fungicide treatment runs conducted in the mycotoxin accumulation inhibition method according to the invention. Thus, in each of the "first fungicide treatment step" and the "second fungicide treatment step", the fungicide treatment can be conducted one time, or two times or more.

The preferred embodiments of the present invention are described below. The following embodiments are merely examples of the representative embodiments of the present invention. The description is made in the order shown below.
1. Mycotoxin accumulation inhibitor
   (1) Metconazole
   (2) Formulation
2. Mycotoxin accumulation inhibition method
   (1) First fungicide treatment step
   (2) Second fungicide treatment step

### 1.Mycotoxin accumulation inhibitor

### (1) Metconazole

The mycotoxin accumulation inhibitor according to the present invention contains metconazole as an active ingredient. Metconazole is a triazole compound represented by Formula shown below, and exhibits a potent controlling effect on a disease in wheat families, fruits, vegetables, lawn, rice and the like. Also as shown in Examples, metconazole has a direct inhibitory activity on the production of the toxin by a pathogen.

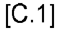

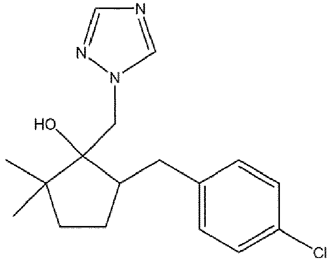

The diseases on which metconazole can exhibit a controlling effect may for example be those listed below.

### [Disease in wheat]

Fusarium head blight (Fusarium graminearum), leaf blotch (Mycosphaerella graminicola), powdery mildew (Erysiphe graminis), leaf rust (Puccinia recondita), stripe rust (Puccinia striiformis) and the like.

### [Disease in barley]

Fusarium head blight (Fusarium graminearum), net blotch (Pyrenophora teres), barley scald (Rhynchosporium secalis) and the like.

### [Disease in rapeseed]

Sclerotinia rot (Sclerotinia sclerotiorum).

### [Disease in lawn]

Large patch (Rhizoctonia solani), brown patch (Rhizoctonia solani), dollar spot (Sclerotinia homoeocarpa) and the like.

### [Disease in rice]

Discolored rice (Curvularia sp.), sheath blight (Rhizoctonia solani), bakanae disease (Gibberella fujikuroi).

### [Other diseases]

Coffee rust (Hemileia vastatrix), banana leaf spot (Mycosphaerellaminima), apple brown spot (Diplocarpon mali), mango anthracnose (Colletotrichum gloeosporioides) and the like.

The mycotoxins the production of which can be inhibited by metconazole include the toxins produced by the pathogens of the diseases listed above. Those which can be exemplified are deoxynivalenol (DON) and nivalenol (NIV) produced by the pathogens of the Fusarium head blight, as well as T2 toxin, zearalenone, fumonisin which is produced by the pathogen of rice bakanae disease.

### (2) Formulation

The mycotoxin accumulation inhibitor according to the invention is used usually after mixing with a solid carrier, liquid carrier, surfactant, other formulation auxiliaries to produce various forms such as dust, wettable powder, granule, emulsifiable concentrate and the like.

The carrier, diluent, and surfactant used as formulation auxiliaries may be those listed below. First, the solid carrier may for example be talc, kaolin, bentonite, diatomaceous earth, white carbon, clay and the like. The liquid diluent may for example be water, xylene, toluene, chlorobenzene, cyclohexane, cyclohexanone, dimethyl sulfoxide, dimethyl formamide, alcohol and the like. The surfactant is used preferably as being selected based on its effect. The emulsifier employed preferably includes polyoxyethylene alkylaryl ether, polyoxyethylene sorbitan monolaurate and the like. The dispersant employed preferably includes lignin sulfonate, dibutylnaphthaline sulfonate and the like, while the wetting agent employed preferably includes alkyl sulfonate, alkylphenyl sulfonate and the like.

There is a formulation which is used directly or which is used after dilution to a certain concentration with water and the like. When used as a mycotoxin accumulation inhibitor, metconazole is contained in a spray solution preferably at a concentration within the range from 5 to 50 ppm. When intending to control the disease in addition to the mycotoxin accumulation inhibition, the concentration of metconazole contained in the spray solution is desired to be within the range from 50 to 10000 ppm.

### 2. Mycotoxin accumulation inhibition method

### (1) First fungicide treatment step

The mycotoxin accumulation inhibition method according to the invention comprises a first fungicide treatment step for treating a cereal plant after the flowering stage with the mycotoxin accumulation inhibitor as defined in claim 1.

The time of the first fungicide treatment step may be anytime after the flowering stage. Specifically, it is preferably either during a stage from the beginning of the yellowing stage through the end of the browning stage or after cropping. For the purpose of achieving a further effective inhibitory activity on the accumulation of the toxin in a grain after cropping, the time of the first fungicide treatment step may also be both a stage from the beginning of the yellowing stage through the end of the browning stage and a time after cropping. Furthermore, the time of the first fungicide treatment step may also be the milking stage and/or the turning color stage, in addition to at least either during a stage from the beginning of the yellowing stage of the aforementioned cereal plant through the end of the browning stage or after cropping.

The first fungicide treatment step is conducted during the stage before cropping, such as during the yellowing stage, and the mycotoxin accumulation inhibitor may be applied to the overground portion of the cereal plant, including the spikes. When the first fungicide treatment step is conducted in the yellowing stage, the treatment with the mycotoxin accumulation inhibitor may be conducted within 14 days before cropping during which the use is restricted when applying a conventional metconazole formulation (such as the formulations under the pesticide registration No. 22527 and No.21925).

A first fungicide treatment step may be conducted after cropping, whereby the mycotoxin accumulation inhibitor is applied to the grain of a cereal plant after cropping. The treatment of the grain with the fungicide may be conducted by dressing, smearing, spraying, or dipping. When the first fungicide treatment step is conducted after cropping, the treatment with the mycotoxin accumulation inhibitor may be conducted within the grain storage stage during which the use is restricted when applying a conventional metconazole formulation.

The concentration of metconazole in the fungicide for the treatment is at a level of 1/20 to 1/5 based on the level usually employed for the disease control. More typically, the concentration of metconazole in the first fungicide treatment step is preferably within the range from 5 to 50 ppm in the treatment fungicide. Nevertheless, in view of inhibiting the retention of the fungicide in the grain, it is preferable to reduce the metconazole treatment concentration to a possible lowest level as long as the effect of the invention is achieved.

For achieving a further effective inhibition of the accumulation of the toxin in a grain after cropping, the fungicide treatment may be conducted two times or more in the first fungicide treatment step. For example, when the time of the first fungicide treatment step is both during the stage from the beginning of the yellowing stage through the end of the browning stage and after cropping, then the fungicide application to the overground portion can be conducted once or more and the fungicide dressing onto the grains can be conducted once or more.

### (2) Second fungicide treatment step

The mycotoxin accumulation inhibition method according to the invention may comprise, in addition to a first fungicide treatment step, a second fungicide treatment step in which the fungicide is applied during the flowering stage. While the second fungicide treatment step is conducted only for the purpose of the toxin accumulation inhibition, it may be conducted also for the purpose of the disease control in addition to the toxin accumulation inhibition.

The fungicide treatment in the second fungicide treatment step is conducted by applying the mycotoxin accumulation inhibitor to the overground portion of the cereal plant, including the spikes.

When the second fungicide treatment step is conducted only for the purpose of inhibiting the toxin accumulation, the concentration of the metconazole in the fungicide for the treatment may be at a level of 1/20 to 1/5 based on the level employed for the purpose of both of the toxin accumulation inhibition and the disease control. Thus, the treatment may be conducted at a concentration similar to that in the first fungicide treatment step. On the other hand, for the purpose of the disease control in addition to the toxin accumulation inhibition, the treatment may be conducted at a concentration similar to that in a conventional case.

For the purpose of achieving a further effective inhibitory activity on the accumulation of the toxin in a grain after cropping or on the disease onset, the fungicide treatment may be conducted twice or more in the second fungicide treatment step.

### Examples

The present invention is further described typically referring to Test Examples shown below. However, the present invention is not limited to the following Test Examples.

### <Reference Example: Toxin production inhibition test using metconazole>

A PDA medium containing metconazole at 0, 0.1, or 0.2 ppm was inoculated with wheat family Fusarium head blight microorganism (Fusarium graminearum Fg15 strain) and cultured at 25°C for 1 week. The cells on the surface of the medium were collected into a tube and the cell weight was measured. The tube into which the cells had been collected was then charged with the mixture of acetonitrile and water to extract the mycotoxin, and the mycotoxin (DON) was quantified using a mass spectrometer. Based on the quantification value, the amount of the toxin per cell weight was calculated.

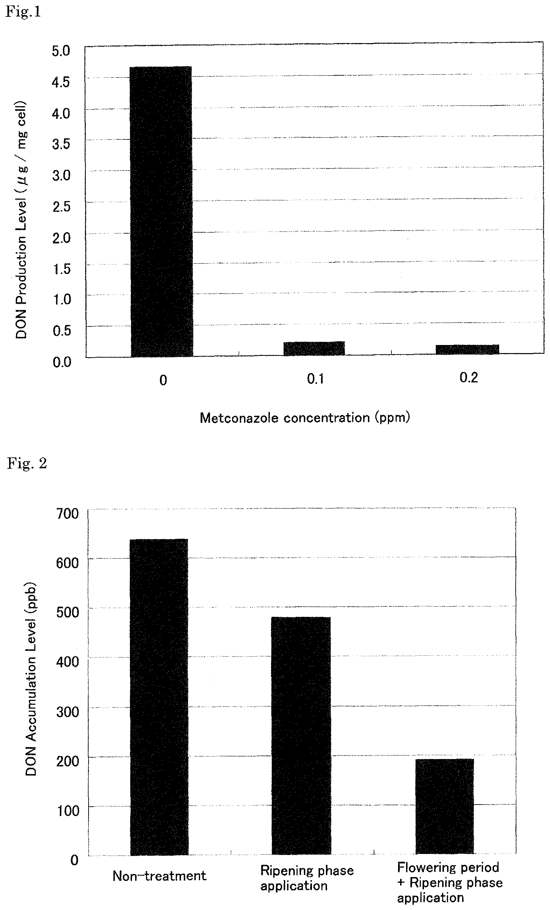

The results are shown in Figure 1. The medium containing metconazole at 0.1 or 0.2 ppm exhibited the toxin amount which was significantly smaller than that of the medium containing no metconazole. This means that metconazole has an inhibitory activity on the toxin production by the pathogen.

The wheat family Fusarium head blight microorganism (Fusarium graminearum Fg15 strain) has an MIC value (minimum inhibition concentration) to metconazole of 1.56 ppm. Metconazole inhibited the toxin level at a concentration lower by 7 to 15 times than the MIC value at which the cells can survive. This means that metconazole has a direct inhibitory activity on the production of the toxin by the pathogen.

### <Test Example 2: Toxin accumulation inhibition test in wheat grain by treatment with metconazole during yellowing stage>

An autumn sowing wheat was employed to conduct a field application test. In order to promote the infection with the Fusarium head blight, the corn grains having the wheat family Fusarium head blight microorganism (Fusarium graminearum H-3 strain) grown thereon were sown over the entire surface of the field 1 month before the flowering stage (30g/m²). A 18% wettable powder of metconazole was subjected to a 2000-fold dilution, and applied once in the yellowing stage or each once during the flowering stage and in the yellowing stage (1500L/ha). 2 Weeks after cropping, the mycotoxin (DON) in the grains was quantified by an ELIZA method. The test is conducted in the area of 0.3 × 3.5 m (1.05 m²) with triplicate for one plot.

The results are shown in Figure 2. The grain cropped after application of metconazole contained significantly smaller amount of the toxin when compared with the grain cropped without application of metconazole. This means that metconazole has an inhibitory activity on the production of the toxin by the pathogen.

Metconazole is usually applied once during the flowering stage when a highest Fusarium head blight controlling effect can be achieved, and is known to exhibit a significantly reduced controlling effect when applied after the flowering stage. In this Test Example, the accumulation of the toxin in the grains after cropping was inhibited even when the application was conducted in the pre-cropping yellowing stage in which almost no disease controlling effect is considered to be achieved.

### <Test Example 3: Toxin accumulation inhibition test in barley grain by treatment with metconazole during browning stage>

A barley (flowering variety, autumn sowing) was employed to conduct a field application test. In order to promote the infection with the Fusarium head blight, the corn grains having the wheat family Fusarium head blight microorganism (Fusarium graminearum H-3 strain) grown thereon were sown over the entire surface of the field 1 month before the flowering stage (30g/m²). A 18% wettable powder of metconazole was subjected to a 2000-fold dilution, and applied once in the browning stage (1500L/ha). The mycotoxin (DON) in the grains at the time of cropping and after storage at room temperature for a half year after cropping was quantified by an ELISA method. The test is conducted in the area of 0.5 × 4 m (2 m²) with triplicate for one plot.

The DON accumulation level of the grain cropped without application of metconazole was 2940 ppb, and the DON accumulation level was increased to a level as high as 4040 ppb after storage for a half year. On the contrary, the DON accumulation level in the grain cropped after application of metconazole was as significantly low as 704 ppb, and the DON accumulation level after storage for a half year was only 407 ppb. This means that metconazole, even when applied in the browning stage far after the flowering stage which is ordinarily suitable to application, can inhibit the toxin production by the pathogen thereby inhibiting the toxin accumulation in the grain after cropping. Also based on the results of this Test Example, it was revealed that metconazole can inhibit the accumulation of the toxin in the grain during the post-cropping storage stage even when applied in the browning stage immediately before cropping in which almost no disease controlling effect is considered to be achieved.

### Industrial Applicability

According to the mycotoxin accumulation inhibition method and the mycotoxin accumulation inhibitor of the invention, the accumulation of the mycotoxin in the grain after cropping can effectively be inhibited. As a result, the mycotoxin accumulation inhibition method and the like of the invention are useful in maintaining the mycotoxin concentration in a cereal crop at a level less than the standard limit.

## Claims

1. A method for inhibiting the accumulation of mycotoxin produced by a pathogen in a grain after cropping comprising (i) treating the ceral plant after the flowering stage, which is the day when the spike of the grain having at least one flowering spikelet occupies 40 - 50 % of the entire spikes, with a fungicide containing metconazole as an active ingredient, wherein the concentration of metconazole in the fungicide is 1/20 to 1/5 of the concentration employed for control of said pathogen.

2. The method of claim 1, wherein the concentration of metconazole in the fungicide is in the range of 5 - 50 ppm.

3. The method according to claim 1 or 2, wherein the time of the treatment is at least either during a stage from the beginning of the yellowing stage which is a stage during which the stems and the leaves are withering and the spikes loose the green color, and the kernel water content is 20 to 30 %, which corresponds to the time immediately before cropping through the time suitable for cropping, through the end of the browning stage which is a stage during which the plant body is in a withering state and the spike is readily broken and the kernel water content becomes 20 % or less, with a hardness allowing no nail mark to remain, or after cropping.

4. The method of any claims 1 - 3, further comprising (ii) treating the cereal plant during the flowering stage thereof.

5. The method of claim 4, wherein the metconazole concentration in the fungicide used in step (i) is lower than that in the fungicide used in step (ii).

6. Use of a fungicide comprising metconazole as an active ingredient as a mycotoxin accumulation inhibitor for mycotoxin produced by a pathogen in a grain after cropping, wherein the concentration of metconazole in the fungicide is 1/20 to 1/5 of the concentration employed for control of said pathogen.

7. The use of claim 6, wherein the concentration of metconazole in the fungicide is in the range of 5 - 50 ppm.

## Patentansprüche

1. Verfahren zum Hemmen der Ansammlung von Mykotoxin, produziert von einem Krankheitserreger in einem Korn nach der Ernte, umfassend (i) Behandeln der Getreidepflanze nach dem Blütestadium, welches der Tag ist, an dem die Ähre des Korns mit mindestens einem blühenden Ährchen 40 - 50% der gesamten Ähren ausmacht, mit einem Fungizid, das Metconazol als aktiven Inhaltsstoff enthält, wobei die Konzentration von Metconazol im Fungizid 1/20 bis 1/5 der Konzentration beträgt, die zur Kontrolle des Krankheitserregers eingesetzt wird.

2. Verfahren nach Anspruch 1, wobei die Konzentration von Metconazol im Fungizid im Bereich von 5 - 50 ppm liegt.

3. Verfahren nach Anspruch 1 oder 2, wobei die Zeit der Behandlung mindestens entweder während eines Stadiums vom Beginn des Gelbfärbungsstadiums, das ein Stadium ist, während dessen die Halme und die Blätter absterben und die Ähren die grüne Farbe verlieren und der Kornwassergehalt 20 bis 30% beträgt, was der Zeit unmittelbar vor der Ernte bis zur für die Ernte geeigneten Zeit entspricht, bis zum Ende des Braunfärbungsstadiums, das ein Stadium ist, während dessen sich der Pflanzenkörper in einem Absterbezustand befindet und die Ähre leicht gebrochen wird und der Kornwassergehalt 20% oder weniger wird, mit einer Härte, die keinen Fingernageleindruck zurückbleiben lässt, oder nach der Ernte ist.

4. Verfahren nach einem der Ansprüche 1 - 3, weiterhin umfassend (ii) Behandeln der Getreidepflanze während des Blütestadiums derselben.

5. Verfahren nach Anspruch 4, wobei die Metconazolkonzentration im Fungizid, das in Schritt (i) verwendet wird, niedriger ist als jene im Fungizid, das in Schritt (ii) verwendet wird.

6. Verwendung eines Fungizids, umfassend Metconazol als aktiven Inhaltsstoff als Mykotoxinansammlungshemmer für Mykotoxin, produziert von einem Krankheitserreger, in einem Korn nach der Ernte, wobei die Konzentration von Metconazol im Fungizid 1/20 bis 1/5 der Konzentration beträgt, die für die Kontrolle des Krankheitserregers eingesetzt wird.

7. Verwendung nach Anspruch 6, wobei die Konzentration von Metconazol im Fungizid im Bereich von 5 - 50 ppm liegt.

## Revendications

1. Procédé pour inhiber l'accumulation d'une mycotoxine produite par un pathogène dans une céréale après récolte, comprenant (i) le traitement de la plante céréale après le stade de floraison, qui est le jour où l'épi de la céréale ayant au moins un épillet en fleurs occupe 40 à 50% de la totalité des épis, avec un fongicide contenant du metconazole en tant qu'ingrédient actif, dans lequel la concentration de metconazole dans le fongicide est de 1/20 à 1/5 de la concentration employée pour combattre ledit pathogène.

2. Procédé selon la revendication 1, dans lequel la concentration de metconazole dans le fongicide est dans la gamme de 5 à 50 ppm.

3. Procédé selon la revendication 1 ou 2, dans lequel le moment du traitement est au moins soit pendant un stade dès le début du stade de jaunissement, qui est un stade pendant lequel les tiges et les feuilles flétrissent et les épis perdent la couleur verte, et la teneur en eau des grains est de 20 à 30%; ce qui correspond au moment immédiatement avant la récolte jusqu'au moment approprié pour la récolte, jusqu'à la fin du stade de brunissement, qui est un stade pendant lequel le corps de la plante est dans un état de flétrissement et l'épi est facilement cassé et la teneur en eau des grains devient de 20% en moins, avec une dureté ne permettant pas à une marque d'ongle de rester, soit après la récolte.

4. Procédé selon l'une quelconque des revendications 1 à 3, comprenant en outre (ii) le traitement de la plante céréale pendant le stade de floraison de celle-ci.

5. Procédé selon la revendication 4, dans lequel la concentration de metconazole dans le fongicide utilisé dans l'étape (i) est inférieure à celle dans le fongicide utilisé dans l'étape (ii).

6. Utilisation d'un fongicide comprenant du metconazole en tant qu'ingrédient actif en tant qu'inhibiteur d'accumulation de mycotoxine pour une mycotoxine produite par un pathogène dans une céréale après la récolte, dans laquelle la concentration de metconazole dans le fongicide est de 1/20 à 1/5 de la concentration employée pour lutter contre ledit pathogène.

7. Utilisation selon la revendication 6, dans laquelle la concentration de metconazole dans le fongicide est dans la gamme de 5 à 50 ppm.
